# EUROPEAN PATENT SPECIFICATION

(11) **EP 4 239 227 B1**
(45) Date of publication and mention of the grant of the patent: **03.12.2025**
(21) Application number: 23157754.5
(22) Date of filing: 21.02.2023
(51) Int. Cl.: F16J 9/14, F16J 9/20

(54) **PISTON RING FOR A LARGE TWO-STROKE TURBO-CHARGED UNIFLOW-SCAVENGED CROSSHEAD INTERNAL COMBUSTION ENGINE**
KOLBENRING FÜR EINEN GROSSEN TURBOAUFGELADENEN GLEICHSTROMGESPÜLTEN KREUZKOPFVERBRENNUNGSMOTOR MIT ZWEI SCHRITTEN
SEGMENT DE PISTON POUR UN GRAND MOTEUR À COMBUSTION INTERNE À CROSSE À BALAYAGE À DEUX TEMPS ET À TURBOCOMPRESSEUR

(30) Priority: 02.03.2022 DK PA202101044
(43) Date of publication of application: 06.09.2023
(73) Proprietor: Everllence, filial af Everllence SE, Tyskland, 2450 Copenhagen SV (DK)
(72) Inventor: Samuelsson, Per Erik, 2450 Copenhagen SV (DK); Andersson, Henrik, 21845 Vintrie (SE); Fogh, Jesper Weiss, 2000 Frederiksberg (DK)
(74) Representative: Nordic Patent Service A/S

(56) References cited:
- EP-A1- 3 168 505
- EP-A1- 3 933 232
- EP-B1- 2 045 488
- JP-A- 2015 183 822

## Description

### TECHNICAL FIELD

The present invention relates to a piston ring for use in a piston ring pack in an annular ring groove in the sidewall of a piston of a large two-stroke turbo-charged uniflow-scavenged crosshead internal combustion engine to seal against the pressure in a combustion chamber above the piston.

### BACKGROUND

Large two-stroke turbo-charged uniflow-scavenged crosshead engines are typically used in propulsion systems of marine vessels or as the prime mover in power plants. Typically, these engines are operated with heavy fuel oil marine diesel, or with gaseous fuel, for example, natural gas or petroleum gas.

The engine pistons are provided with a ring pack that seals against the combustion pressure in order to prevent combustion gases from penetrating the scavenge space. In addition, the profile of the piston rings ensures cylinder oil is caught to form the lubricating film on the inner side of the cylinder liner. The piston rings in the ring pack seal a piston oscillating at a speed of approximately 10 m/sec for compressed air and combustion gasses at a pressure of around 250 bar pressure and a temperature of around 400 °C and using only a few drops of cylinder oil per engine revolution as lubrication, and all with an expected service life of many thousand hours. Therefore, the main requirements for piston rings are high resistance to wear, scuffing, and corrosion and a low drop in elasticity at high temperatures.

Due to the aggressive nature of the combustion gases created when operating with heavy fuel oil, the inner walls of the cylinder liners are lubricated with a special high buffer cylinder lubrication oil that protects the inner walls of the cylinder liners from the aggressive components of the combustion gases. The provision of the cylinder lubrication and the size of the components involved, like pistons with diameters between 25 cm and 108 cm are the reason for the ring pack of a large two-stroke turbo-charged uniflow-scavenged crosshead engine to be different from the ring pack in smaller four-stroke diesel engines.

The ring pack of a large two-stroke turbo-charged uniflow-scavenged crosshead engine typically includes four piston rings with at least the top piston ring being a CPR ring, i.e. the top piston ring is provided with pressure relief grooves that allow for a well-defined and control flow of hot gas from the combustion chamber to the underside of the top piston ring thereby controlling the pressure drop over the top ring and distributing the load over several rings in the ring pack. However, ring packs including two or three piston rings are also common alternatives.

Further, in order to obtain optimum performance of the individual piston rings in the ring pack, it is well known to provide the outer ring surface of the piston ring with different profiles. Thus, it is known to have a piston ring with an outer ring contact surface that has a barrel-shaped profile, which over the whole perimeter of the piston ring has the same radius of curvature, the size and position of which gives the majority of sliding outer surface of the piston ring a sealing area of about 1/3 of the height of said outer surface. The disadvantage of such a design is, that it provides a limited sealing surface over the gap area, where the sealing often will begin to leak after a relatively short time of operation of the piston ring. Such leakage and possible overheating in the gap area often result in coating peel off and collapsed piston ring. Thus, the problem with the existing design at the gap area is simply insufficient sealing which creates increased temperature, which ultimately leads to severe coating damage and blow by that affects the rings below. To overcome said disadvantage WO2015165634A1 describes a piston ring with a so-called double barrel design which comprises a butt joint region with two circumferentially overlapping ring ends and an outer surface, where the outer surface of each ring end in the butt region is provided with each their convex or barrel shaped surface region. In this way a more effective sealing should be obtained in the gap area, however this known design is both complicated and expensive to produce.

A piston ring of the kind mentioned in the introduction is known from EP 3933232 A1.

JP 2015 183822 A discloses a piston ring according to the preamble of claim 1.

A further problem with the existing piston ring design around the gap area is that only a part of the sliding surface is actively sealing, this may rapidly lead to leakage through the gap which increases the temperature and finally result in an overheated gap area, in which case a severe peel off of the cermet coating at the gap area is often observed, which in turn creates a full passage of combustion gas at the gap area. Finally, this leakage accelerates and results in blow by and very high temperature at the gap due to a high gas flow and lack of sealing.

To solve this, it is suggested to use a flat profile, for example, +/- 10 to 20 degrees from the ring gap for all the different piston ring sizes in order to increase the sealing area/line to cover the whole lock area and to improve the material properties at the gap area by using laser cladding at the flat sliding surface. Hereby, leakage is omitted, and wear resistance is improved in order to keep the flat sealing profile consistent. Improved wear resistance and material strength provide most probably a consistent flat profile at the gap area. The purpose of this action is superior sealing and no risk of coating peel off at the gas tight lock.

### SUMMARY OF THE INVENTION

It is an object of the present invention to provide a piston ring of the kind mentioned in the introduction having first- and second engaging end portions providing a gap area, where the above mentioned challenges relating to obtaining an effective sealing in the gap area are at least significantly reduced.

The foregoing and other objects are achieved by the features of the independent claims. Further implementation forms are apparent from the dependent claims, the description, and the figures.

According to a first aspect, there is provided a piston ring according to claim 1.

Hence, it will be possible to obtain an effective sealing in the gap area, where problems related to coating damages and blow by of combustions gases from the combustion chamber above the piston are avoided. By providing the ring area of the partition with an outer surface as defined above it is ensured that the sliding surface of the piston ring which provides the sealing effect also includes a sufficient part of the end portion with the recess in the gap area to ensure a proper sealing effect also in this gap area, also in piston rings with a ring partition with engaging end portions, where the recess constitutes less than 1/3 of the height of the outer ring surface in the gap area.

It is preferred that the circumferential extent of the ring partition extends at least 10, preferably 15, and most preferably 20 angular degrees in each circumferential direction from the gap area. In this way, the sealing area is increased and the sealing effect improved, which in turn creates lower temperature and thereby less risk for coating peel off and blow by, which in turn most probably leads to ring collapse on the lower rings in the ring pack.

The piston ring may be designed in any appropriate way in the ring partition providing an optimal sealing effect, however, it is preferred that the recess opens to the outer ring surface and to the lower ring surface, and the finger being flush with the outer ring surface and with the lower ring surface.

It is further preferred that the ring body is non-circular so that the pressure between the cylinder liner and the outer ring surface of the piston ring in the gap area of the ring partition is lower than on the remaining circumference of the top piston ring. This non-circular form is required so that the piston ring exerts an exactly defined pressure over the whole ring circumference when inserted in the circular cylinder liner. This pressure can in principle be distributed evenly over the circumference, however, a negative oval form is generally aimed for in a piston ring for use a piston of a large two-stroke turbocharged uniflow-scavenged internal combustion engine. This means that the pressure in the gap area of the ring partition is lower than on the remaining circumference which avoids increased pressure on the ring partition during operation of the engine.

In an embodiment of the invention the piston ring is uncoated or coated with a thermal spray coating or with a galvanic coating.

In an embodiment of the invention, the piston ring is provided with controlled leakage grooves in the outer ring surface for allowing a controlled flow of gas from above to below the piston ring.

In an embodiment of the invention the piston ring is a top and/or second piston ring.

### BRIEF DESCRIPTION OF THE DRAWINGS

The invention will be explained in more details with reference to the example embodiment shown in the drawings, in which:
Fig. 1 is a section through a segment of a piston fitted in a cylinder liner showing a ring pack with four piston rings,
Fig. 2 on a larger scale, is a section of a piston fitted in a cylinder liner, showing a ring pack with five piston rings,
Fig. 3 is a plan view of a part of a piston ring in an installed condition,
Fig. 4 is a front view of part of the piston ring of Fig. 3 in the area around the ring partition,
Fig. 5 is a cross-sectional view of an embodiment of the piston ring in the ring section, and
Fig. 6 is a perspective front view of part of the piston ring of Fig. 3 in the area around the ring partition.

### DETAILED DESCRIPTION OF PREFERRED EMBODIMENTS

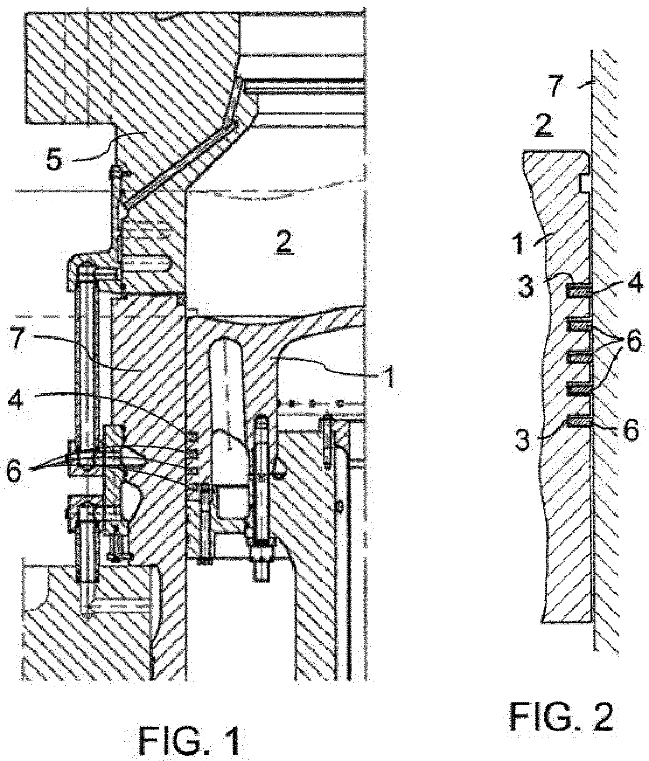

In Figs. 1 and 2 is shown a piston 1, which has a side provided with several ring grooves 3 of which the top groove 3 receives a piston top ring 4 and the lower piston rings 6 have been inserted in the lower grooves 3. The top piston ring 4 and the lower piston rings 6 form a so-called ring pack of cooperating piston rings 4, 6. The piston 1 is of a large two-stroke turbo-charged uniflow-scavenged crosshead engine design and the piston 1 defines together with a cylinder liner 7 and a cylinder cover 5 a combustion chamber 2.

The piston rings 4, 6 prevent the gas pressure in the combustion chamber 2 from penetrating to a space below the piston 1.

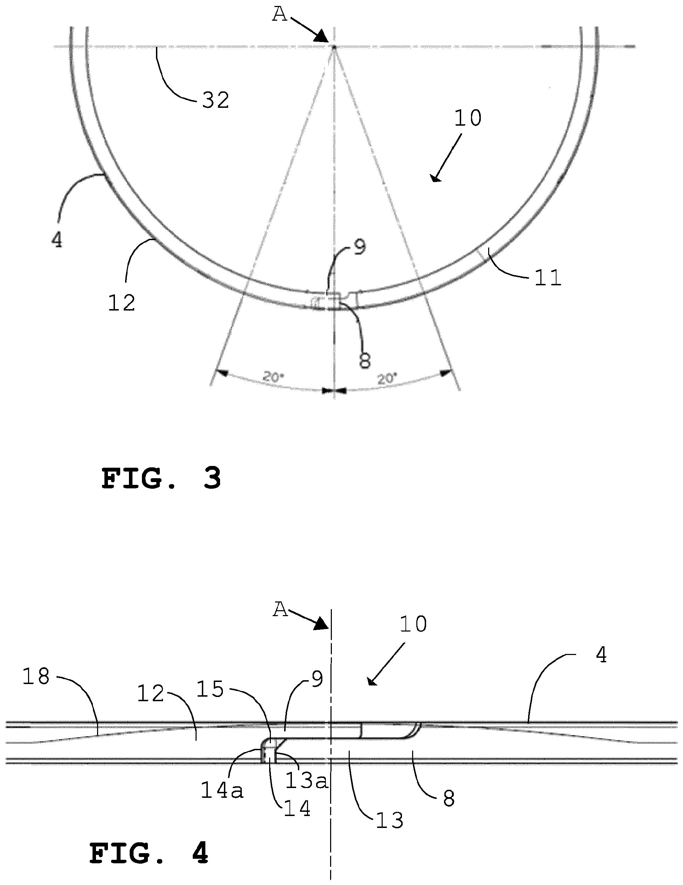

Figs. 3 to 6 illustrate an example embodiment of a piston ring 4 according to the invention. The piston ring 4, 6 have a ring body 11, a diameter 32, a height 21, an upper ring surface 22, a lower ring surface 23, an outer ring surface 12 and an inner ring surface 24. During operation of the engine the outer ring surface 12 slides against an inner side of a cylinder liner 7. The piston ring 4 has a ring partition 10 comprising first- and second engaging end portions 8, 9, which substantially prevents combustion gases from the combustion chamber 2 to flow through the ring partition 10. The ring partition 10 renders it possible partly to expand the ring diameter at the mounting in the ring groove 3, partly to permit two engaging end the portions 8, 9 of the piston ring 4 to withdraw from each other as the piston ring 4 gets worn during use.

As seen in greater detail in Fig. 4 the first engaging end portion 8 comprises a circumferentially extending finger 13 and the second engaging end portion 9 comprises a circumferentially extending recess 14. The finger 13 is received and may slide in the recess 14. Between the end 13a of the finger 13 and the end 14a of the recess 14 is a gap area 15, in which gap area only the end portion 9 with the recess 14 constitutes part of the outer ring surface 12, which during operation of the engine slides against the cylinder liner 7 and seal against the pressure in a combustion chamber 2 above the piston 1.

In the piston ring according to the invention the outer ring surface 12 of the piston ring 4, 6 at least in the ring partition 10 is, as seen in cross-section, convex and part of an imaginary circle having a center 20 and a radius of curvature 25 of a least 0,8 times, preferably at least 1 times the diameter of the piston ring 4, 6. In this way, it is ensured that at least a sufficient part of the outer ring surface 12 also in the gap area 15 provides an effective sealing against the pressure in a combustion chamber 2 above the piston 1, so that problems related to coating damages and blow by of combustions gases from the combustion chamber 2 above the piston 1 are avoided. Line 18 in Fig. 4 indicates the border between a lower part of the outer ring surface 12 sliding against the cylinder liner 7 and providing proper sealing effect and the remaining outer ring surface 12 above line 18, which does not provide effective sealing.

Thus, the outer ring surface 12 of the piston ring 4, 6 with a diameter of 800 mm and prepared according to the invention is convex with a radius of curvature 25 of a least 800 mm in at least that part of the ring partition 10 comprising the gap area 15. In this way, the outer ring surface 12 of the piston ring 4, 6 will be experienced as being approximately flat in this ring partition 10, hence providing optimum sealing effect.

In the shown embodiment in Fig. 3 and 4 the circumferential extent of the ring partition 10 extends 20 angular degrees in each circumferential direction from the gap area 15.

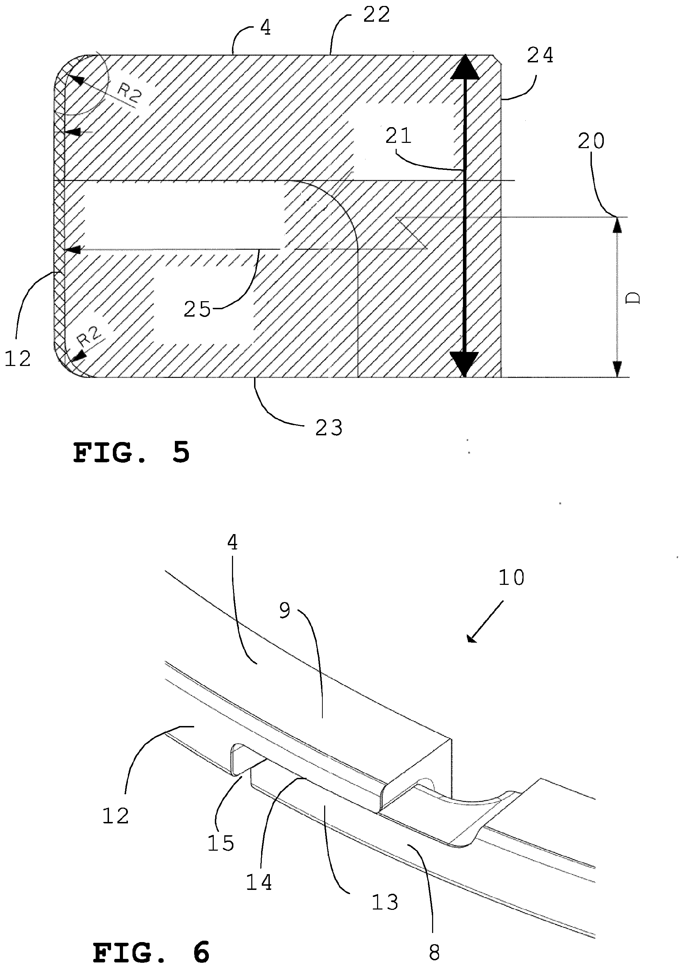

In Fig. 5 is seen a cross-section view of an embodiment of a piston ring 4, 6 having a radius of 800 mm and seen in the ring partition 10, where the radius of curvature 25 is 900 mm, so the outer ring surface 12 seems approximately flat over most of its height. In the shown embodiment, the height of the piston ring is 18 mm and the center of the outer ring surface curvature is in middle, i.e. 9 mm from below. As mentioned, the outer ring surface 12 is part of an imaginary circle, the center 20 of which, as seen in a horizontal plan, containing the lower ring surface 23. Because the end portion 9 with the recess 14 in most piston rings with a ring partition with engaging end portions constitutes less than 1/2, most often about or less than 1/3 of the height of the outer ring surface 12 in the gap area 15, it is suggested according to the present invention, to ensure sufficient sealing effect, that the center 20 of the imaginary circle, as seen in a horizontal plane containing the lower ring surface 23, is situated at a distance D that is at least about 2/3 of the height of the piston ring 4, 6 from the lower surface 23 of the piston ring 4, 6. In this way, the outer ring surface 12 of the piston ring 4, 6 at least in said ring partition 10 is essentially flat over at least 3/4 of its height.

As best seen in Fig. 6, the ring partition 10 of the piston ring 4, 6 with first- and second engaging end portions 8, 9 is designed in such a way that the recess 14 opens to said outer ring surface 12 and to said lower ring surface 23, and the finger 13 being flush with said outer ring surface 12 and with said lower ring surface 23.

The ring body 11 may advantageously be designed non-circular so that the pressure between the cylinder liner 7 and the outer ring surface 12 of the piston ring 4, 6 in the area of the ring partition 10 is lower than on the remaining circumference of the top piston ring.

Further, the piston ring 4, 6 may be coated with a thermal spray coating or with a galvanic coating.

Further, the piston ring 4, 6 may be provided with controlled leakage grooves in the outer ring surface 12 for allowing a controlled flow of gas from above to below said piston ring 4, 6.

The piston ring 4, 6 may be a top and/or second piston ring.

## Claims

1. A piston ring (4, 6) for use in a piston ring pack in an annular ring groove (3) in the sidewall of a piston (1) of a large two-stroke turbo-charged uniflow-scavenged crosshead internal combustion engine to seal against the pressure in a combustion chamber (2) above the piston (1), the piston ring (4, 6) having:
a ring body (11) with a symmetry axis (A), a diameter (32), a height (21),
an upper ring surface (22), a lower ring surface (23), an outer ring surface (12),
an inner ring surface (24), which outer ring surface (12) during operation of the engine slides against an inner side of a cylinder liner (7), and first- and second engaging end portions (8, 9) at a ring partition (10) that allows expansion and contraction of the piston ring (4, 6),
where the first engaging end portion (8) comprises a circumferentially extending finger (13) and the second engaging end portion (9) comprises a circumferentially extending recess (14) shaped and sized for displaceably receiving the finger (13), where a gap area (15) is provided at the end of the finger (13), in which gap area (15) only the end portion (9) with the recess (14) constitutes part of the outer ring surface (12) sliding against the cylinder liner (7), whereby the outer ring surface (12) of the piston ring (4, 6) at least in the circumferential extent of said ring partition (10), as seen in cross section, is convex, wherein the recess (14) opens to said outer ring surface (12) and to said lower ring surface (23), and the finger (13) is flush with said outer ring surface (12) and with said lower ring surface (23),
**characterized in that** the outer ring surface (12) of the piston ring (4, 6), as seen in cross section, is part of an imaginary circle having a center (20) and a radius of curvature (25) of a least 0,8 times, preferably at least 1 times the diameter (32) of the piston ring (4, 6), and **in that** the center (20) of the imaginary circle, as seen in a horizontal plane containing the lower ring surface (23), is situated at a distance (D) that is at least about 2/3 of the height (21) of the piston ring (4, 6) from the lower surface (23) of the piston ring (4, 6).

2. A piston ring (4, 6) according to claim 1, **characterized in that** the circumferential extent of said ring partition extends at least 10, preferably 15 and most preferably 20 angular degrees in each circumferential direction from the gap area (15).

3. A piston ring (4, 6) according to any one of claims 1 to 2, **characterized in that** the ring body (11) is non-circular so that the pressure between the cylinder liner (7) and the outer ring surface (12) of the piston ring (4, 6) in the circumferential extent of the ring partition (10) is lower than on the remaining circumference of the top piston ring (4,6).

4. A piston ring (4, 6) according to any one of claims 1 to 3, **characterized in that** said piston ring (4, 6) is uncoated or coated with a thermal spray coating or with a galvanic coating.

5. A piston ring (4) according to any one of claims 1 to 4, **characterized in that** said piston ring (4, 6) is provided with controlled leakage grooves in the outer ring surface (12) for allowing a controlled flow of gas from above to below said piston ring (4, 6).

6. A piston ring (4) according to any one of claims 1 to 5, **characterized in that** said piston ring (4, 6) is a top and/or second piston ring.

## Patentansprüche

1. Kolbenring (4, 6) zur Verwendung in einem Kolbenringpaket in einer ringförmigen Ringnut (3) in der Seitenwand eines Kolbens (1) eines großen turboaufgeladenen längsgespülten Zweitakt-Kreuzkopf-Verbrennungsmotors, um gegen den Druck in einer Brennkammer (2) über dem Kolben (1) abzudichten, wobei der Kolbenring (4, 6) Folgendes aufweist:
einen Ringkörper (11) mit einer Symmetrieachse (A), einem Durchmesser (32), einer Höhe (21), einer oberen Ringfläche (22), einer unteren Ringfläche (23), einer äußeren Ringfläche (12), einer inneren Ringfläche (24), wobei die äußere Ringfläche (12) während des Betriebs des Motors an einer Innenseite einer Zylinderlaufbuchse (7) gleitet, und einen ersten und zweiten Eingriffsendabschnitt (8, 9) an einer Ringteilung (10), die eine Ausdehnung und Zusammenziehung des Kolbenrings (4, 6) ermöglicht,
wobei der erste Eingriffsendabschnitt (8) einen umlaufenden Finger (13) und der zweite Eingriffsendabschnitt (9) eine umlaufende Aussparung (14) aufweist, die so geformt und bemessen ist, dass sie den Finger (13) verschiebbar aufnehmen kann, wobei am Ende des Fingers (13) ein Spaltbereich (15) bereitgestellt ist, in dem nur der Endabschnitt (9) mit der Aussparung (14) einen Teil der gegen die Zylinderlaufbuchse (7) gleitenden äußeren Ringfläche (12) bildet, wobei die äußere Ringfläche (12) des Kolbenrings (4, 6) zumindest in der Umfangserstreckung der Ringteilung (10), im Querschnitt gesehen, konvex ist, wobei die Aussparung (14) sich zu der äußeren Ringfläche (12) und zu der unteren Ringfläche (23) hin öffnet und der Finger (13) mit der äußeren Ringfläche (12) und der unteren Ringfläche (23) bündig ist,
**dadurch gekennzeichnet, dass** die äußere Ringfläche (12) des Kolbenrings (4, 6) im Querschnitt gesehen Teil eines gedachten Kreises mit einem Mittelpunkt (20) und einem Krümmungsradius (25) von mindestens dem 0,8-facher, vorzugsweise mindestens dem 1-fachen Durchmesser (32) des Kolbenrings (4, 6) ist, und dass der Mittelpunkt (20) des gedachten Kreises, in einer die untere Ringfläche (23) enthaltenden horizontalen Ebene gesehen, in einem Abstand (D) von der unteren Fläche (23) des Kolbenrings (4, 6) angeordnet ist, der mindestens etwa 2/3 der Höhe (21) des Kolbenrings (4, 6) beträgt.

2. Kolbenring (4, 6) nach Anspruch 1, **dadurch gekennzeichnet, dass** die Umfangserstreckung der Ringteilung sich in jeder Umfangsrichtung von dem Spaltbereich (15) um mindestens 10, vorzugsweise 15 und am besten 20 Winkelgrade erstreckt.

3. Kolbenring (4, 6) nach einem der Ansprüche 1 bis 2, **dadurch gekennzeichnet, dass** der Ringkörper (11) unrund ist, sodass der Druck zwischen der Zylinderlaufbuchse (7) und der äußeren Ringfläche (12) des Kolbenrings (4, 6) in der Umfangserstreckung der Ringteilung (10) geringer ist als am übrigen Umfang des oberen Kolbenrings (4, 6).

4. Kolbenring (4, 6) nach einem der Ansprüche 1 bis 3, **dadurch gekennzeichnet, dass** der Kolbenring (4, 6) unbeschichtet oder mit einer thermischen Spritzbeschichtung oder mit einer galvanischen Beschichtung beschichtet ist.

5. Kolbenring (4) nach einem der Ansprüche 1 bis 4, **dadurch gekennzeichnet, dass** der Kolbenring (4, 6) in der äußeren Ringfläche (12) mit kontrollierten Leckagekanälen bereitgestellt ist, um einen kontrollierten Gasstrom von oben nach unten durch den Kolbenring (4, 6) zu ermöglichen.

6. Kolbenring (4) nach einem der Ansprüche 1 bis 5, **dadurch gekennzeichnet, dass** der Kolbenring (4, 6) ein oberer und/oder zweiter Kolbenring ist.

## Revendications

1. Segment de piston (4, 6) pour utilisation dans un paquet de segments de piston dans une rainure de segment annulaire (3) dans la paroi latérale d'un piston (1) d'un grand moteur à combustion interne à crosse à deux temps uniflux et à turbocompresseur pour assurer l'étanchéité contre la pression dans une chambre de combustion (2) au-dessus du piston (1), le segment de piston (4, 6) ayant :
un corps de segment (11) avec un axe de symétrie (A), un diamètre (32), une hauteur (21),
une surface de segment supérieure (22), une surface de segment inférieure (23), une surface de segment extérieure (12), une surface de segment intérieure (24), laquelle surface de segment extérieure (12) glissant, pendant le fonctionnement du moteur, contre un côté intérieur d'une chemise de cylindre (7), et une première et une deuxième portions d'extrémité d'engagement (8, 9) au niveau d'une cloison de segment (10) qui permet la dilatation et la contraction du segment de piston (4, 6),
où la première portion d'extrémité d'engagement (8) comprend un doigt (13) s'étendant sur la circonférence et la deuxième portion d'extrémité d'engagement (9) comprend un renfoncement (14) s'étendant sur la circonférence, formé et dimensionné pour recevoir de manière déplaçable le doigt (13), où une zone d'espace (15) est prévue à l'extrémité du doigt (13), dans laquelle zone d'espace (15) seule la portion d'extrémité (9) avec le renfoncement (14) constitue une partie de la surface de segment extérieur (12) glissant contre la chemise de cylindre (7), moyennant quoi la surface de segment extérieur (12) du segment de piston (4, 6) est convexe au moins dans l'étendue circonférentielle de ladite cloison de segment (10), telle que vue en coupe transversale, le renfoncement (14) s'ouvrant sur ladite surface de segment extérieur (12) et sur ladite surface de segment inférieure (23), et le doigt (13) étant aligné avec ladite surface de segment extérieur (12) et avec ladite surface de segment inférieure (23),
**caractérisé en ce que** la surface de segment extérieure (12) du segment de piston (4, 6), telle que vue en coupe transversale, fait partie d'un cercle imaginaire ayant un centre (20) et un rayon de courbure (25) d'au moins 0,8 fois, de préférence d'au moins 1 fois le diamètre (32) du segment de piston (4, 6), et **en ce que** le centre (20) du cercle imaginaire, tel que vu dans un plan horizontal contenant la surface de segment inférieure (23), est situé à une distance (D) qui est au moins d'environ 2/3 de la hauteur (21) du segment de piston (4, 6) à partir de la surface inférieure (23) du segment de piston (4, 6).

2. Segment de piston (4, 6) selon la revendication 1, **caractérisé en ce que** l'étendue circonférentielle de ladite cloison de segment s'étend sur au moins 10, préférentiellement 15 et le plus préférentiellement 20 degrés angulaires dans chaque direction circonférentielle à partir de la zone d'espace (15).

3. Segment de piston (4, 6) selon l'une quelconque des revendications 1 à 2, **caractérisé en ce que** le corps de segment (11) n'est pas circulaire de telle sorte que la pression entre la chemise de cylindre (7) et la surface de segment extérieure (12) du segment de piston (4, 6) dans l'étendue circonférentielle de la cloison de segment (10) est plus faible que sur le reste de la circonférence du segment de piston supérieur (4, 6).

4. Segment de piston (4, 6) selon l'une quelconque des revendications 1 à 3, **caractérisé en ce que** ledit segment de piston (4, 6) est non revêtu ou revêtu d'un revêtement par pulvérisation thermique ou d'un revêtement galvanique.

5. Segment de piston (4) selon l'une quelconque des revendications 1 à 4, **caractérisé en ce que** ledit segment de piston (4, 6) est pourvu de rainures de fuite contrôlée dans la surface de segment extérieure (12) pour permettre un écoulement contrôlé de gaz du haut vers le bas dudit segment de piston (4, 6).

6. Segment de piston (4) selon l'une quelconque des revendications 1 à 5, **caractérisé en ce que** ledit segment de piston (4, 6) est un segment de piston supérieur et/ou un deuxième segment de piston.
